# EUROPÄISCHE PATENTSCHRIFT

(11) **EP 0 710 354 B1**
(45) Veröffentlichungstag und Bekanntmachung des Hinweises auf die Patenterteilung: **20.05.1998**
(21) Anmeldenummer: 94920894.6
(22) Anmeldetag: 19.07.1994
(51) Int. Cl.: G01H 1/00, B07B 1/10

(54) **TROCKENKLASSIERER FÜR FEINSTKOHLE**
DRY SORTER FOR VERY FINE COAL
CALIBREUR A SEC POUR FINES DE MOINS DE 0,5 MM

(30) Priorität: 19.07.1993 DE 4324144
(43) Veröffentlichungstag der Anmeldung: 08.05.1996
(73) Patentinhaber: Hecker & Krolsch GmbH & CO. KG, D-53909 Zülpich (DE); Sasol Limited, 2000 Johannesburg (ZA)
(72) Erfinder: MEYER, Phillippus, Jacobus, 2302 Secunda (ZA); PIETERSE, Dirk, Petrus, 2302 Secunda (ZA); MÜLLER, Christian, D-52349 Düren (DE); BUDERATH, Josef-Friedhelm, D-53881 Euskirchen (DE)
(74) Vertreter: Schulte, Jörg, Dipl.-Ing.
(86) Internationale Anmeldenummer: DE9400843
(87) Internationale Veröffentlichungsnummer: WO9503137

(56) Entgegenhaltungen:
- DE-A- 2 344 476
- DE-A- 2 408 210
- DE-A- 3 409 822
- GB-A- P07 225
- GB-A- 960 676

## Beschreibung

Die Erfindung betrifft eine Anlage zur Trennung von feinstkörnigen Stoffen, insbesondere von Feinstkohle, mit einem in einem Traggerüst gehaltenen schräggestellten Gurtverlauf, dessen Förderbanddecke mit in Längsrichtung des Gurtförderes verlaufenden Längsrillen ausgerüstet ist, mit dem an der aufgabeseitigen Umkehrolle von der hochgestellten Längsseite her aufgebenden Einlauf, dem vorkopf der austragsseitigen Umkehrrolle vorgesehenen Feingutaustrag und dem an der tiefer liegenden Längsseite der Förderbanddecke vorgesehenen Grobgutaustrag. Die Erfindung betrifft außerdem ein Verfahren zur Trocknung und Klassierung von Feinstgut, insbesondere Feinstkohle, bei dem die Feinstkohle vom oberen Rand her mengenmäßig einstellbar auf die endlos umlaufende, schräggestellte und entsprechend einstellbare Förderbanddecke eines Gurtförderers aufgegeben wird, wobei die feinsten Kohlepartikel in den Rillen der Förderbanddecke verbleiben und kopfseitig des Gurtförderers ausgetragen werden, während die groben Kohlepartikel über die schräggestellte Förderbanddekke ablaufen und über die tieferliegende Längsseite der Förderbanddecke abgefördert werden.

Bei der klassischen Methode der Klassierung von unterschiedliche Körnung aufweisenden Stoffen wird das Gemisch über ein mit einer entsprechenden Lochung versehenes Sieb geleitet und dann in Überlaufkorn und Durchlaufkorn geteilt. Bekannt ist es auch, die Siebfläche in Vibration zu versetzen, um auf diese Art und Weise die Trennung der Kornklassen zu beschleunigen. Eine solche Siebklassierung ist bisher bis zu einer Korngröße von 10 mm und auch darunter durchführbar, wird aber schwieriger und ungenauer, je höher der Feinstkornanteil ist. Insbesondere bei Walzenschrämmaschinen und Continious-Minern ist der Feinstkornanteil sehr hoch, während der Bergeanteil in diesem Feinstkornanteil relativ niedrig ist. Da die Aufbereitungskosten für Feinstkohle sehr hoch sind und darüber hinaus die dann feuchte Feinstkohle anschließend getrocknet werden muß, ist versucht worden, diese Feinstkohle auf trockenem Wege zu klassieren. Aus der GB-PS 7 225 aus dem Jahre 1914 ist eine Anlage zur Klassierung von feinstkörnigen Stoffen und dabei vor allem von Kohle bekannt, bei der ein Gurtförderer mit einem Rillenprofilgurtband ausgerüstet ist. Durch den schräggestellten Gurtförderer bleibt dann das aufgegebene Feingut in den Rillen hängen und wird vom Grobgut getrennt, das über die Rillen hinweg seitlich vom Förderer herabfällt. Über die Länge des Gurtförderers gesehen sind Tragrollen quer zur Laufrichtung angeordnet, die durch mehrkantige Ausbildung einen Rütteleffekt erzeugen, um auf diesem Weg den Nachteil auszugleichen, der durch die nur relativ geringe Schräge des Förderers zu verzeichnen ist. Ein ungenaues und einen relativ hohen Feinstkornanteil aufweisendes Grobkorn ist die Folge. Würde der Gurtförderer schräger gestellt, würde das Band selbst bei relativ hoher Vorspannung abrutschen, wobei dies durch die Rüttelrollen noch begünstigt würde. Folge wäre ein häufiger Stillstand und ein neues Ausrichten des Klassierers.

Der Erfindung liegt daher die Aufgabe zugrunde, eine Anlage und ein Verfahren zu schaffen, die einen reibungslosen und effizienten Dauerbetrieb eines Trockenklassierers gewährleisten.

Die Aufgabe wird erfindungsgemäß dadurch gelöst, daß die Förderbanddecke auf der Unterseite eine randseitig der hochgestellten Längsseite über die Gurtfläche vorstehende Halteleiste aufweist, die mit im Abstand und längs des Traggerüstes angeordneten Halterollen korrespondierend ausgebildet und das Umlenken an den antreibbar ausgebildeten Umkehrrollen begünstigend unterteilt ist und daß den Halterollen zugeordnete Druckrollen, die auf der Gurtoberfläche abrollen vorgesehen sind.

Eine derartige Anlage ermöglicht es vorteilhaft, unterschiedliche Schrägen beim Gurtförderer vorzusehen, wobei jeweils unabhängig von der gewählten Schräge die Förderbanddecke durch die Halteleiste und die ihnen zugeordneten Halterollen und Druckrollen so fixiert ist, daß jeweils der gewünschte Trenneffekt sicher auftritt. Der Trenneffekt tritt auch vor allem dadurch auf, daß durch die gewählte und einstellbare Schräge vorzugsweise 35° auf Rüttelrollen oder ähnliche Einrichtungen verzichtet werden kann. Dabei sind die Halteleisten auf der Unterseite der Förderbanddecke angeordnet, so daß sie den Klassiererfolg nicht beeinträchtigen, wobei vorteilhafterweise auch die Halterollen zwischen dem Obergurt und dem Untergurt positioniert sind, so daß sie als solche keine Beeinträchtigung darstellen, andererseits aber auch durch das Fördergut nicht beeinträchtigt werden können. Lediglich die Druckrollen, die sicherstellen, daß eine gleichmäßige Abstützung durch die Halterollen erfolgt, sind bezüglich des Obergurtes auf der Oberseite vorgesehen, wobei sie durch entsprechende Schutzeinrichtungen gesichert werden können. Darüber hinaus werden über die Länge des Gurtes ja nur einige dieser Druckrollen benötigt, so daß sie als solches auch keine Behinderung für den Betrieb des Gurtförderers darstellen. Vorteilhaft ist, daß mit einer derartigen Anlage ein Trockenklassierer geschaffen ist, der für den Dauerbetrieb optimal geeignet ist und der eine gleichbleibende trockene Klassierung ermöglicht, so daß das Feinstgut bereits vor der Zuführung der Feinkohle zur Setzmaschine getrennt werden kann. Die bisher notwendige teure Trocknung entfällt dementsprechend.

Bei einer zweckmäßigen Ausbildung der Erfindung ist vorgesehen, daß die Förderbanddecke beidseitig mit einer Halteleiste ausgerüstet ist, der jeweils im Abstand auch an der unteren Längsseite positionierte Halterollen zugeordnet sind. Damit wird die Förderbanddecke beidseitig gehalten, wobei die unteren Halterollen dafür sorgen, daß die Förderbanddecke bzw. der Förderbandgurt nicht hochläuft. Er wird vielmehr durch die beiderseitige Anordnung der Halteleiste und der Halterollen genau fixiert. Bei den der unteren Längsseite zugeordneten Halterollen kann allerdings auf die Druckrollen verzichtet werden, weil hier ein Hochklappen oder Hochwandern aus dem Bereich der Halterollen nicht zu befürchten ist.

Eine weitere zweckmäßige Ausbildung sieht vor, daß dem Untergurt des Gurtförderers im Abstand positionierte Halterollen und Druckrollen zugeordnet sind, so daß auch der Untergurt genau gehalten wird, so daß ein Abrutschen einerseits, andererseits aber auch ein Hochlaufen des Gurtes in der Schrägstellung sicher vermieden wird.

Eine zweckmäßige Ausführung bezüglich der Halteleiste sieht vor, daß die Unterseite der Förderbanddecke mit der als rechteckiges Gummi- oder Kunststoffprofil ausgebildeten Halteleiste vergeklebt ist. Diese Verarbeitung hat den Vorteil, daß den jeweiligen Anwendungsfällen also beispielsweise der jeweiligen notwendigen Länge des Gurtförderers entsprechende Profile einsetzbar sind. Bei entsprechend breitem Profil ist durch die Halteleiste auch der notwendige Druck auch ohne weiteres aufzunehmen, so daß die notwendige Sicherung der Förderbanddecke gegeben ist.

Um sicherzustellen, daß über die Halterollen die Förderbanddecke auch richtig fixiert und gehalten wird, ist erfindungsgemäß vorgesehen, daß das Kunststoffprofil eine mit der Breite der Halterollen korrespondierende Breite aufweist, wobei in der Regel die Halterollen etwas breiter sind als die Halteleisten. Neben der rechteckigen Ausbildung sind auch andere Ausbildungen für die Halteleiste denkbar, wobei eine zweckmäßige Möglichkeit die ist, bei der das Kunststoffprofil eine Dreieckform aufweist, wobei es ein rechtwinkliges Dreieck bildet, das mit den den rechten Winkel einschließenen Winkelseiten an der Unterseite anliegt bzw. parallel zum Gurtband verläuft und wobei die Halterollen korrespondierend ausgebildet sind. Über diese Ausbildung ist die Möglichkeit gegeben, zusammen mit den Druckrollen die notwendige Fixierung vorzusehen. Je nach Anordnung des Dreiecks ist es auch sogar möglich, auf die Druckrollen ganz zu verzichten.

Ein Verzicht auf die Druckrollen ist insbesondere dann möglich, wenn das Kunststoffprofil mit den als Diabolorollen ausgebildeten Halterollen korrespondierend geformt ist oder das Rollen und Profile umgekehrte Formen aufweisen. Diese Ausbildung der Halterollen bzw. Halteleisten bringt die notwendige Fixierung auch in Richtung auf das Auswandern des Fördergurtes, der nun nicht nur daran gehindert wird, bezüglich der Schrägstellung abwärts sich zu bewegen, sondern auch sich von den Tragrollen abzuheben. Druckrollen können hierbei entfallen.

Weiter vorne ist darauf hingewiesen worden, daß die Förderbanddecke bzw. und das Kunststoffprofil als Baueinheit ausgebildet sind. Denkbar ist es aber auch, daß sie in die Förderbanddecke integriert sind, so daß sie bei der Herstellung des Förderbandgurtes gleichzeitig mit hergestellt und geformt werden können.

Das notwendige Aufbereitungsergebnis wird wie weiter vorne beschrieben durch die Längsrillen erreicht, wobei man diese Längsrillen zweckmäßigerweise dadurch der Förderbanddecke zuordnet, daß die Förderbanddecke eine Gurtoberfläche mit aufgeklebter Rillenprofilbahn aufweist. Dies hat den Vorteil, ähnlich wie bei den aufgeklebten Halteleisten, daß man auf übliche Fördergurte zurückgreifen kann, die durch die Rillenprofilbahn bzw. auch die Halteleisten komplettiert werden. Außerdem ist so die genaue Ausbildung der Rillen und der Stege optimaler zu erreichen, weil mit einer entsprechenden Gummibahn gearbeitet werden kann.

Zur genauen Fixierung des Gurtförderers bzw. der Förderbanddecke ist wie weiter oben beschrieben einmal die Anordnung der Halteleisten bzw. Halterollen und zum anderen der Druckrollen notwendig. Um hier eine richtige und auch ruhige Führung der Druckrollen zu gewährleisten, sieht die Erfindung vor, daß die Förderbanddecke randseitig und beidseitig rillenfreie Abrollflächen aufweist. Auf dieser Abrollfläche bzw. den beidseitig angeordneten Abrollflächen werden somit die Druckrollen genau geführt abrollen, um so die genaue Fixierung der Förderbanddecke zu gewährleisten.

Nach der vorliegenden Erfindung ist die Förderbanddecke mit ihrer Rillenprofilbahn in Längsrichtung verlaufende Rillen und Stege aufweist, wobei die Stege mit schrägen Flanken und abgerundeten freien Kanten ausgerüstet sind. Die Rillenprofilbahn weist über die gesamte Breite gleich ausgebildete Rillen und Stege auf, um so ein gleichmäßiges Trennergebnis zu erreichen. Über die schrägstehenden Flanken und die abgerundeten Kanten können die gröberen Körner sich während des Transportes über die Länge des Gurtförderers rechtzeitig noch von der Fein- bzw. Feinstkohle trennen und über die untere Längsseite ausweichen. Nur das wirklich gewünschte Feinstkorn bleibt innerhalb der Rillen haften und wird so auf der Kopfseite sicher ausgetragen, wobei die Versuche gezeigt haben, daß praktisch kein Fehlkorn bzw. unter 10 % Fehlkorn in der Feinstkohle verbleiben.

Eine optimale Trennung ist insbesondere auch dadurch erreichbar, daß die Förderbanddecke mit Stegen ausgerüstet ist, die am freien Ende eine um rund 50 % geringere Breite als an der Verbindungseite aufweisen, was darüber hinaus den Vorteil hat, daß die Stege eine ausreichende Fixierung auf der Bahn bzw. in der Rillenprofilbahn behalten.

Der Gurtförderer ist ein Endlosförderer, wobei die Gurtbanddecke über zwei endseitig angeordnete Umkehrrollen geführt wird, von denen eine mit einem Antrieb ausgerüstet ist. Um dabei Walgarbeiten innerhalb der Halteleiste bzw. der Halteleisten zu vermeiden bzw. gering zu halten, sieht die Erfindung vor, daß die Förderbanddecke im Bereich der Umkehrrollen geführt ist, die dazu randseitig die Halteleisten aufnehmende Ausnehmungen aufweisen. Damit läuft die Gurtbanddecke auf den weiter vorstehenden Flächen, während die Halteleisten etwas tiefer in die Umkehrrollen eingreifen und auch dort eine ausreichende Abstützung erhalten. Damit ist einer Walgarbeit im wesentlichen entgegengewirkt, wobei gegebenenfalls die Halteleisten in Abschnitte unterteilt sind, um insbesondere bei Umkehrrollen mit geringerem Durchmesser die Walgarbeit noch weiter zu reduzieren.

Eine Unterteilung der Halteleisten in einzelne Abschnitte kann allerdings bei den Halterollen Probleme bringen und zu einem höheren Verschleiß beitragen. Um dies zu vermeiden, andererseits aber dennoch die Umleitung der Halteleisten bzw. der Gurtbanddecke zu erleichtern, sieht die Erfindung vor, daß die Förderbanddecke mit Halteleisten bestückt ist, die mit im Abstand ausgebildeten, zur Mitte der Gurtbanddecke bogenförmig auslaufenden und einen Stützsteg belassenden Ausschnitten ausgerüstet sind. Damit bleibt eine durchgehende Stützfläche für die Halterollen erhalten, während die Halteleisten im übrigen Bereich sich beim Umlaufen der Umkehrrolle auseinanderbewegen bzw. zusammenbewegen zu können. Damit ist eine optimale Ausbildung geschaffen.

Um praktisch beliebig breite Gurtbanddecken herstellen zu können und das auch noch zu vernünftigen Preisen, sieht die Erfindung vor, daß die Förderbanddecke mit einer aus mehreren miteinander verbundenen Teilbahnen zusammengesetzten Rollenprofilbahn versehen ist. Im Berührungsbereich der einzelnen Rillenprofilbahnen entstehen dann doppelt breite Stege, was aber die Wirksamkeit der gesamten Gurtbanddekke bzw. des gesamten Gurtförderers nicht beeinträchtigt.

Um die Spannung der Gurtbanddecke gleichmäßig zu gestalten bzw. eine ausreichende Übertragung der Antriebskräfte zu gewährleisten, sind die Förderbanddecke über die Umkehrrollen spannbar ist, die im Traggerüst verschnittbar gelagert angeordnet sind. Damit kann auch bei längerem Betrieb beispielsweise die Vorspannung erhöht werden oder aber bei geringer Beladung der Gurtbanddecke kann die Vorspannung auch runterreguliert werden.

Weiter vorne ist bereits darauf hingewiesen worden, daß es zweckmäßig sein kann, die Neigung bzw. Schrägstellung des Gurtförderers jeweils den Gegebenheiten anzupassen. Um dies auf einfache und zweckmäßige Weise bewerkstelligen zu können, sieht die Erfindung vor, daß die Förderbanddecke mit den Halteteilen sowie den Umkehrrollen und Antrieben einem zum Traggerüst gehörenden Stützträger zugeordnet ist, der mit der unteren Längsseite im Traggerüst über Schwenkgelenke gelagert und an der oberen Längsseite über Stelleinrichtungen gehalten ist. Damit kann der gesamte Teil des Gurtförderers in der Schräge gleichmäßig verändert werden, ohne daß die Gefahr besteht, daß die Gurtbanddecke an einzelnen Stellen eine unterschiedliche Schrägstellung erhält bzw. aufweist. Über die Stelleinrichtungen wird einfach der gesamte Stützträger mehr oder weniger um das Schwenkgelenk herum verschwenkt und in der Neigung verändert.

Die Stelleinrichtungen sind zweckmäßigerweise als Stellspindeln ausgebildet, wobei den Stellspindeln Motore zugeordnet werden können, um auf diese Art und Weise bei mehreren über die Länge verteilt angeordneten Stellspindeln eine gleichmäßige Einstellung zu gewährleisten bzw. die Einstellung zu erleichtern. Denkbar ist es natürlich auch, daß die Stelleinrichtungen von Hand betätigt werden.

Das Grobkorn läuft wie schon mehrfach erwähnt über die einzelnen Stege hinweg und wird über die untere Längsseite der Gurtbanddecke ausgetragen und zwar auf einen dort in Längsrichtung des Gurtförderers verlaufenden Grobkornförderer. Um die herabrollenden groben Körner sicher auffangen zu können, ist dabei vorgesehen, daß der unteren Längsseite der Förderbanddecke eine verstellbar ausgebildete Leitplanke zugeordnet ist. Über diese Leitplanke werden diese groben Körner quasi in den Grobkornförderer geführt bzw. so geführt, daß sie nicht über den Grobkornförderer hinweglaufen.

Ein einwandfreier Betrieb auf Dauer ist für einen derartigen Klassierer nur möglich, wenn das Feinstkorn an der Umkehre auch ausgetragen wird. Dies wird dadurch erreicht, daß dem Untergurt des Gurtförderers in die Rillenprofilbahn eingreifende Reinigungsbürsten zugeordnet sind. Diese Reinigungsbürsten drehen sich vom Gurtförderer angetrieben oder verfügen über entsprechende Antriebe und sorgen dafür, daß die einzelnen Rillen immer sauber gehalten sind, nachdem der Gurt die in der Regel angetriebene Umkehre passiert hat.

Eine gleichmäßige Säuberung der einzelnen Rillen gemäß der Erfindung wird noch dadurch begünstigt, daß die Reinigungsbürsten auf einer Welle angeordnet sind, die über einen Antrieb verfügt. Dabei können über die Länge des Gurtbandförderers mehrere Reinigungsbürsten auf einer Welle angeordnet sein und über die Welle angetrieben bzw. gebremst werden und es ist auch denkbar, mehrere Wellen mit Reinigungsbürsten vorzusehen, um so eine sichere Reinigung zu gewährleisten. Der Antrieb der Welle kann dabei so geschaltet werden, daß die Welle und damit auch die Reinigungsbürsten gegenüber dem Gurtförderer langsamer laufen, so daß der Reinigungseffekt sogar noch begünstigt ist.

Statt der Halteleisten und der mechanischen Haltevorrichtung ist gemäß der Erfindung auch eine Lösung möglich, bei der die Förderbanddecke auf der Unterseite randseitig mit den dem Traggurt zugeordneten Spulen korrespondierend angeordneten Permanentmagneten ausgerüstet ist. Dabei kann dieser Linearmotorantrieb so ausgebildet werden, daß damit lediglich die Förderbanddecke gehalten wird. Denkbar ist es aber auch, die gesamten Antriebskräfte über diesen Linearmotorantrieb zu erzeugen, so daß dieser zwei Funktionen übernehmen würde. Da die Permanentmagneten und auch die Spulen im staubfreien Bereich angeordnet sind, ist ein Dauerbetrieb auf diese Art und Weise durchaus möglich.

Ein Verfahren zur trockenen Klassierung von Feinstgut sieht gemäß der vorliegenden Erfindung vor, daß die Förderbanddecke während des Umlaufes gleichmäßig und damit einen ruhigen Lauf ergebend über die gesamte Länge des Gurtförderers von der Unterseite her randseitig abgestützt und der oberen Längsseite rollend geführt und zugleich von der Gurtoberfläche her rollend gehalten wird.

Ein derartiges Verfahren ergibt eine dem jeweiligen Aufgabegut genau anpassbare Verfahrensausführung, ohne daß dafür eine besondere Ausbildung erforderlich wäre. Vor allem ist ein Dauerbetrieb mit diesem Verfahren möglich, weil der Gurtförderer jeweils in der notwendigen Schrägstellung gehalten wird, so daß das Förderband nicht seine Lage verändern kann. Es wird gezielt geführt und in der vorgegebenen, optimalen Lage gehalten.

Zur optimalen Durchführung des erfindungsgemäßen Verfahrens, das heißt der genauen Fixierung des Gurtförderers bzw. der Förderbanddecke ist vorgesehen, daß diese an der oberen und der unteren Längsseite her rollend gehalten wird. Wie weiter vorne ja bereits erläutert, dient die rollende Fixierung einmal dazu, die notwendige Schräge des Gurtförderers vorzugeben bzw. zu verändern und zum anderen an der unteren Längsseite dazu, ein Hochrutschen bzw. Hochwandern des Förderers bei unterschiedlicher Beladung zu verhindern.

Die Erfindung zeichnet sich insbesondere dadurch aus, daß durch diese Anlage, das heißt durch den Trockenklassierer der bisher hohe Aufwand der Aufbereitung für das Feinstgut in den Setzmaschinen einer Aufbereitungsanlage entfällt. Das Feinstgut wird vor der Einführung in die Setzmaschine bereits abgetrennt und braucht damit nicht der teuren Trocknung unterzogen zu werden. Es besteht die Möglichkeit einer Geschwindigkeitsveränderung und der Verstellung der Schräglage, um das Aufbereitungsergebnis zu beeinflussen. Der Trockenklassierer stützt sich im wesentlichen auf einen Gurtförderer ab, der eine besondere Ausbildung aufweist, der aber dennoch eine im Prinzip bekannte Technik darstellt. Vorteilhaft ist, daß damit große Mengen an Feinstkohle bzw. Feinstgut verarbeitet werden können. Außerdem ist der Trockenklassierer störunanfällig, insbesondere dann, wenn die Rillen kontinuierlich über Reinigungsbürsten freigehalten werden.

Weitere Einzelheiten und Vorteile des Erfindungsgegenstandes ergeben sich aus der nachfolgenden Beschreibung der zugehörigen Zeichnungen, in denen ein bevorzugtes Ausführungsbeispiel mit den dazu notwendigen Einzelheiten und Einzelteilen dargestellt ist. Es zeigen:
- Fig. 1: eine vereinfachte Wiedergabe einer Vorkopfansicht des Trockenklassierers,
- Fig. 2: einen Schnitt durch die Förderbanddecke mit den randseitigen Halteleisten,
- Fig. 3: eine besondere Ausbildung der Halteleiste,
- Fig. 4: einen Schnitt durch die Rillenprofilbahn,
- Fig. 5: eine vergrößerte Wiedergabe des Randbereiches einer Förderbanddecke mit Halteleiste,
- Fig. 6: eine Einzeldarstellung des die wesentlichen Teile des Gurtförderers aufnehmenden Stützträgers,
- Fig. 7: die dem Untergurt zugeordneten Reinigungsbürsten,
- Fig. 8: eine Seitenansicht der Aufhängung der Reinigungsbürsten,
- Fig. 9: einen Längsschnitt durch die nicht angetriebene Umkehrrolle und
- Fig. 10: einen Schnitt durch die mit Antrieb ausgerüstete Umkehrrolle.

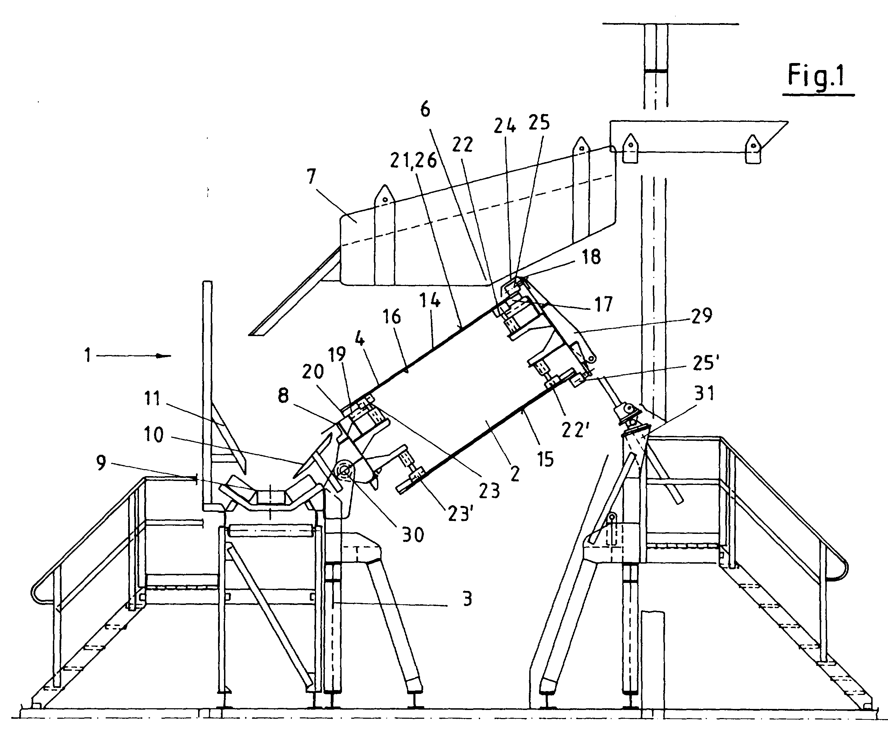

Figur 1 zeigt die gesamte Anlage des Trockenklassierers 1, deren Kernstück der schräggestellte Gurtförderer 2 ist. Dieser Gurtförderer 2 ist in einem Traggerüst 3 angeordnet, das verschiedene Teile zur Abstützung und Führung der Förderbanddecke 4 aufweist.

Über den dem oberen Teil der Förderbanddecke 4 zugeordneten Einlauf 6 wird das Feinstgut auf die Förderbanddecke 4 übergeben. Dieser Einlaufbereich ist als Vibrationssieb 7 ausgebildet. Das Grobgut läuft über die Förderbanddecke 4 und wird über den seitlichen Grobgutaustrag 8 ausgetragen und auf den Grobkornförderer 9 übergeben. Zur genauen Führung dient die Leitplanke 10, die in ihrer Neigung und im Abstand zum Grobgutaustrag 8 veränderbar ist. Auf der gegenüberliegenden Seite des Grobgutaustrages 8 ist eine Überlaufführung 11 vorgesehen, da ja auch der vom Vibrationssieb 7 kommende Grobkornüberlauf über den Grobkornförderer mitaufgenommen werden soll.

Der Gurtförderer 2 verfügt über eine endlos geführte Förderbanddecke 4, wobei die Klassierung über den entsprechend ausgebildeten Obergurt 14 bewirkt wird, während der Untergurt 15 der Rückführung der Förderbanddecke 4 dient.

Auf der Unterseite 16 des Obergurtes 14 bzw. der Oberseite des Untergurtes 15 sind Halteleisten 17 und zwar an der oberen Längsseite 18 und zusätzlich auch Halteleisten 19 an der unteren Längsseite 20 vorgesehen. Diese Halteleisten 17, 19 sind insbesondere auf die Unterseite 16 aufgeklebt. Die Halteleisten 17, 19 dienen zur Abstützung bzw. zum Halten der Förderbanddecke 4, so daß immer eine gleichmäßige Gurtfläche 21 zur Aufnahme bzw. zur Klassierung des Aufgabengutes zur Verfügung steht. Dabei sind dem Traggerüst 3 Halterungen 22, 23 zugeordnet, die an den Halteleisten 17 bzw. 19 abrollen und dafür sorgen, daß die Förderbanddecke 4 einmal nicht in Richtung auf die untere Längsseite 20 abrutschen kann bzw. auch daß sie insbesondere bei unterschiedlicher Beladung nicht in Richtung obere Längsseite 18 hochgeschoben werden kann. Die Halterollen 22, 23 sorgen somit dafür, daß die Förderbanddecke 4 in der jeweils genau vorgegebenen Position verbleibt und zwar auch bei extremer Schrägstellung des Grutförderers 2. Das gilt sowohl für den Obergurt 14 wie auch den Untergurt 15, dem ebenfalls Halterollen 22, 23' zugeordnet sind.

Um ein Hochbiegen bzw. Hochgehen und Ausweichen des Randes der Förderbanddecke 4 zu vermeiden, sind unter Abdeckungen 24 laufende Druckrollen 25 vorgesehen. Die Figur 1 verdeutlicht dazu, daß zusätzlich auch Druckrollen 25' auf der Unterseite des Untergurtes 15 ablaufen.

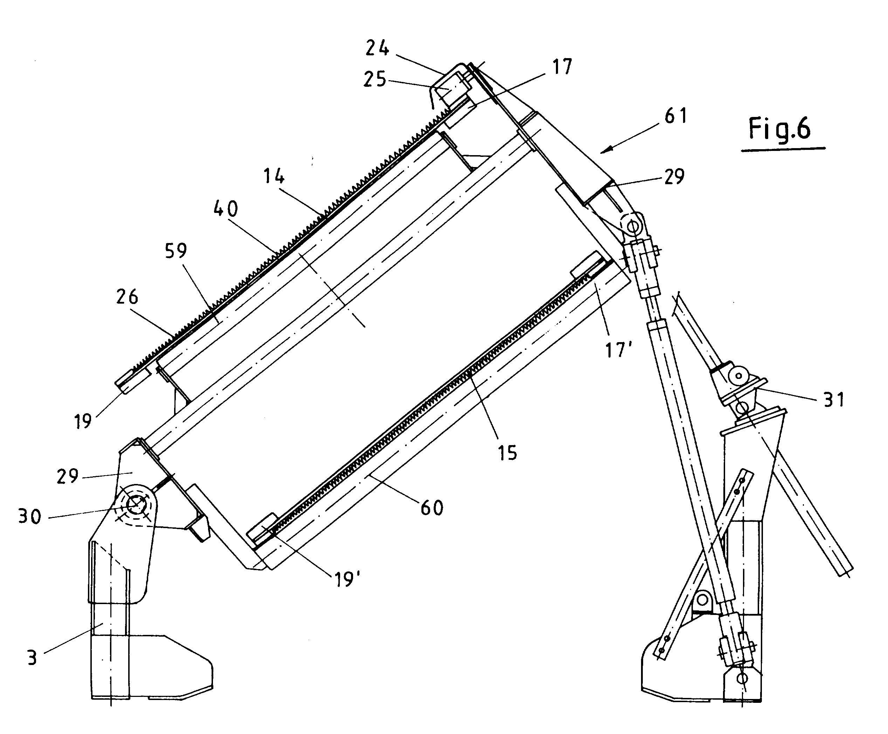

Figur 1 verdeutlicht, daß die aus den nachfolgenden Figuren noch hervorgehende Gurtfläche 21 der Förderbanddecke 4 in der vorgegebenen Schrägstellung (15 - 45°, vorzugsweise 35°) verlaufen kann. Eine derartige Gurtoberfläche 26 ermöglicht es, daß das Feinstgut in den aus Figur 2 ersichtlichen Rillen verbleibt, während das grobe Korn über die jeweiligen Stege hinwegrollt und dann wie schon erwähnt an der unteren Längsseite 20 den eigentlichen Gurtförderer 2 bzw. den Trockenklassierer 1 verläßt. Die Neigung des Gurtförderers 2 kann verändert werden, da der gesamte Gurtförderer 2 quasi einem Stützträger 29 zugeordnet ist, wie dies in Figur 6 verdeutlicht ist. Dieser Stützträger, der quasi die Förderbanddecke 4 und die zugeordneten Teile des Traggerüstes 3 aufnimmt, um den Gurtförderer 2 entsprechend betreiben zu können, ist um das Schwenkgelenk 30, das an der unteren Längsseite 20 angeordnet ist, schwenkbar. Zum Verschwenken dient dabei eine Stelleinrichtung 31, die, wie Figur 1 und Figur 6 entnommen werden kann, über eine Spindel oder ähnliches aufgetrieben werden kann, wobei diese Spindel auch mit einem Antrieb auszurüsten ist, so daß eine motorische Verstellung ohne weiteres möglich ist. Über die Längsseite des Gurtförderers 2 gesehen sind zweckmäßigerweise zwei oder auch mehr derartige Stelleinrichtungen 31 angeordnet.

Figur 1 zeigt eine Förderbanddecke 4 im Schnitt. Deutlich wird dabei, daß auf der Unterseite 16 gemäß Figur 2 die als Halteleisten 17 bzw. 19 dienenden Gummiprofile 33 angeordnet sind. Diese Gummiprofile 33 reichen bis an den Gurtrand 34 heran bzw. bilden mit diesem eine gleichmäßige Kante sowohl an der oberen Längsseite 18 wie an der unteren Längsseite 20.

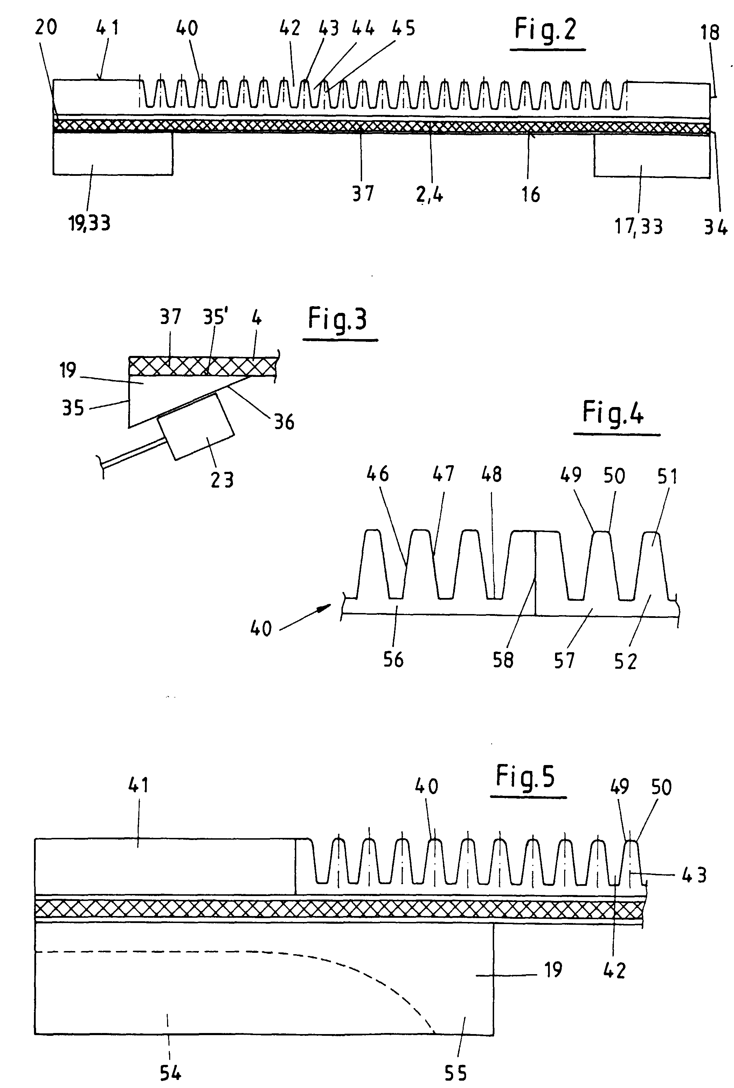

Nach Figur 3 kann die Halteleiste 17, 19 bzw. das Gummiprofil 33 auch eine dreieckige Form aufweisen, wobei die geraden, den rechten Winkel einschließenden Winkelseiten 35 beispielsweise zur Verbindung mit der Förderbanddecke 4 dienen bzw. den Gurtrand 34 mit bilden. Die dritte Seite 36 des Dreiecks dient dann als Abrollfläche für die Halterolle 23.

Figur 2 und Figur 3 ist zu entnehmen, daß im Gegensatz zu den Gummiprofilen 33 die eigentliche Förderbanddecke 4 einen Gurt 37 aufweist, der auch mit einem Gewebe ausgerüstet ist oder ähnliche Verstärkungen aufweist.

Figur 2 sowie auch die Figuren 4 und 5 verdeutlichen, daß auf den eigentlichen Gurt des Gurtförderers 2 eine Rillenprofilbahn 40 aufgeklebt ist, die dann die Förderbanddecke 4 ergibt. Diese Rillenprofilbahn 40 weist an beiden Längsseiten 18, 20 Abrollflächen 41 für die Druckrollen 25 auf. Darauf ist im Rahmen der Erläuterung der Figur 1 bereits hingewiesen worden.

Zwischen diesen Abrollflächen 41 sind gleichmäßig ausgebildete Rillen 42, 44 und Stege 43, 45 vorgesehen, wobei die Stege 43, 45 über schräg verlaufende Flanken 46, 47 verfügen und eckige Rillen, während die freien Kanten 49, 50 der Stege 43, 45 abgerundet sind. Dies zeigen insbesondere die Figuren 4 und 5.

Bedingt durch die besondere Formgebung der Stege 43, 45 ergibt sich eine geringere Breite im Bereich der freien Enden 51 der Stege 43 und 45, während auf der Verbindungsseite 25 eine entsprechende Verbreiterung des Steges 43 und 45 erreicht ist. Dadurch ergibt sich eine ausreichende Steifigkeit dieser Stege 43, 45 trotz der verhältnismäßig tiefen Rillen 42, 44.

Figur 5 verdeutlicht, wie die Walgarbeit im Bereich der weiter hinten erläuterten Umkehrrollen verringert wird, wozu die einzelnen Halteleisten 17, 19 über im Abstand ausgebildete Ausschnitte 54 verfügen. Diese Ausschnitte 54 sind dabei so ausgebildet, daß zur Mitte der Förderbanddecke 4 hin ein Stützsteg 55 verbleibt. Die Ausschnitte 54 verlaufen hierzu bogenförmig zur Mitte der Förderbanddecke 4 hin und im Abstand zum Stützrand der Halteleiste 17, 19 hin auslaufend. Dadurch ergibt sich für die abrollenden Halterollen 22 bzw. 23 eine durchgehende Abrollbahn, so daß der Verschleiß ausgesprochen gering gehalten werden kann.

Über die Breite einer derartigen Förderbanddecke 4 gesehen, sollten zweckmäßigerweise mehrere Rillenprofilbahnen 40 bzw. entsprechende Teilbahnen 56, 57 angeordnet werden, um so auch die Breite der Förderbanddecke 4 den Notwendigkeiten entsprechend anpassen zu können. Die Teilbahnen 56, 57 stoßen mit jeweils einem Steg aneinander, so daß sich eine Art Doppelsteg 58 ergibt.

Figur 6 ist bereits erwähnt worden. Ergänzend dazu ist noch darauf hinzuweisen, daß zur glatten gleichmäßigen Führung auch über längere Gurtförderer 2 Stützrollen 59 und 60 einmal für den Obergurt 14 und einmal für den Untergurt 15 vorgesehen sind. Bezüglich der Stützrolle 59 ist jeweils eine geringere Breite vorgesehen, um den randseitig ausgebildeten Halteleisten 17, 19 Rechnung tragen zu können. Gezeigt ist hier auch eine Druckrolle 25 und die dieser zugeordnete Abdeckung 24. Mit 61 ist ein Halteteil bezeichnet, wobei darunter sowohl die Stützrollen 59, 60 wie auch die Halterollen 22, 23 und die Druckrollen 25 gemeint sind. Über diese Gesamtheit der Halteteile 61 ist die genaue Fixierung der Förderbanddecke 4 über die Länge des Gurtförderers 2 gewährleistet.

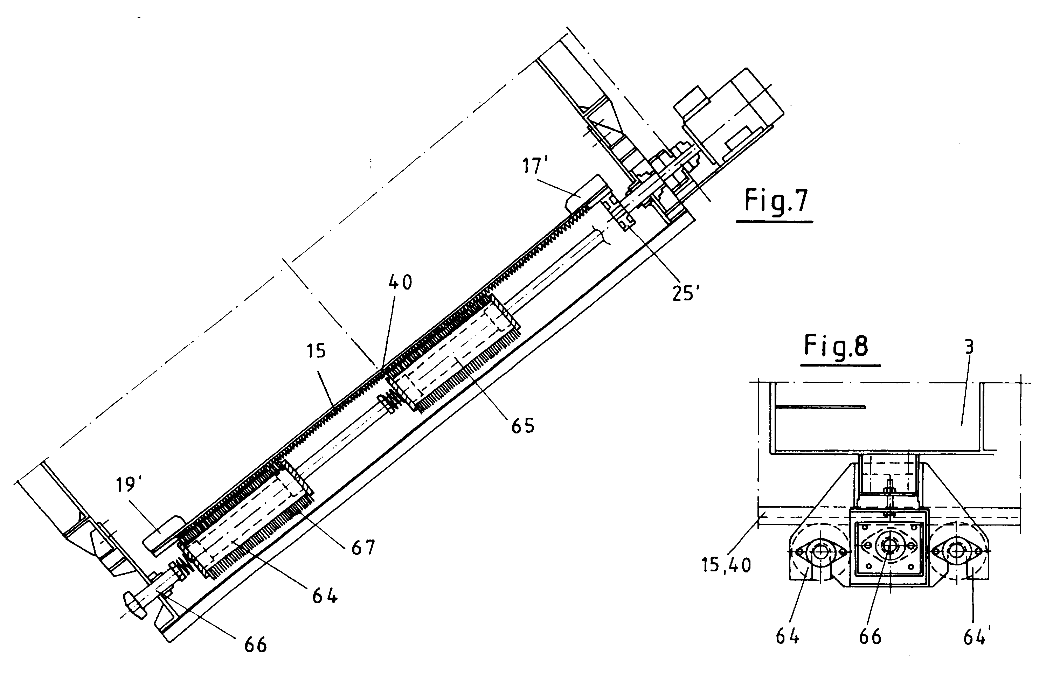

Figur 7 zeigt den unteren Bereich des Gurtförderers 2, wo zur Säuberung der Rillenprofilbahn 40 die auf den Untergurt einwirkenden Reinigungsbürsten 64, 65 dargestellt sind. Die hier wiedergegebenen Reinigungsbürsten 65 sind auf einer gemeinsamen Welle 66 angeordnet und drehen sich somit gleichförmig oder je nach Ausbildung auch mit unterschiedlicher Geschwindigkeit, wobei diese von der Geschwindigkeit der Förderbanddecke 4 abhängt. Denkbar ist es aber auch, die Welle 66 zu bremsen, so daß die Borsten 67 der Reinigungsbürsten 64, 65 eine gezielte Reinigungsarbeit verrichten. In der Regel reicht aber eine ungebremste Ausführung.

Nach Figur 8 sind zwei oder sogar drei Reinigungsbürsten 64, 64' als kompakte Reinigungseinheit anzuordnen, wobei auf der mittigen Welle 66 beispielsweise weitere Reinigungsbürsten angeordnet sein können, so daß sich eine kompakte Reinigungseinheit ergibt, die zweckmäßig und sicher mit dem Traggerüst 3 verbunden ist.

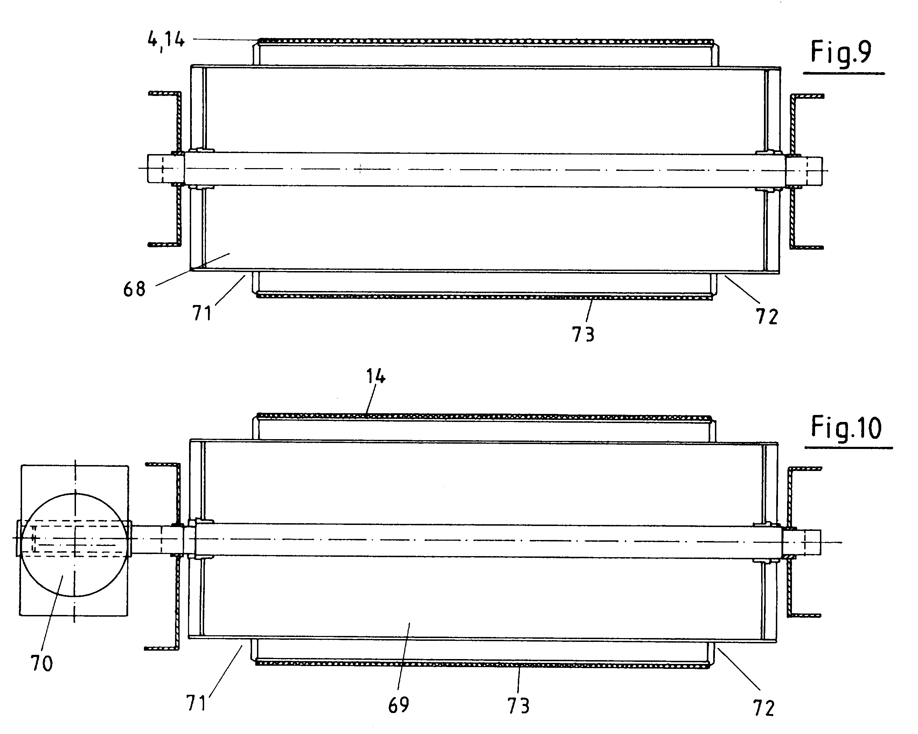

Figuren 9 und 10 zeigen die Umkehrrolle 68 ohne Antrieb und die Umkehrrolle 69 mit Antrieb 70, wobei beide randseitig Ausnehmungen 71, 72 aufweisen, auf denen die hier nicht dargestellten Halteleisten 17, 19 sich beim Umleiten um die Umkehrrollen 68, 69 abstützen.

Die Umkehrrollen 68, 69 sind mit einer Beschichtung 73 versehen, die eine gleichmäßige Übertragung der Antriebskräfte begünstigen soll und das insbesondere im Bereich der in Figur 10 dargestellten Umkehrrolle 69.

## Patentansprüche

1. Anlage zur Trennung von feinstkörnigen Stoffen, insbesondere von Feinstkohle, mit einem in einem Traggerüst gehaltenen, schräggestellten Gurtförderer, dessen Förderbanddecke mit in Längsrichtung des Gurtförderers verlaufenden Längsrillen ausgerüstet ist, mit dem an der aufgabeseitigen Umkehrrolle von der hochgestellten Längsseite her aufgebenden Einlauf, dem vorkopf der austragsseitigen Umkehrrolle vorgesehenen Feingutaustrag und dem an der tieferliegenden Längsseite der Förderbanddecke vorgesehenen Grobgutaustrag,
**dadurch gekennzeichnet,**
daß die Förderbanddecke (4) auf der Unterseite (16) eine randseitig der hochgestellten Längsseite (18) über die Gurtfläche (21) vorstehende Halteleiste (17) aufweist, die mit im Abstand und längs des Traggerüstes (3) angeordneten Halterollen (22, 23) korrespondierend ausgebildet und das Umlenken an den antreibbar ausgebildeten Umkehrrollen (68, 69) begünstigend unterteilt ist und daß den Halterollen zugeordnete Druckrollen (25), die auf der Gurtoberfläche (26) abrollen, vorgesehen sind.

2. Anlage nach Anspruch 1,
**dadurch gekennzeichnet,**
daß die Förderbanddecke (4) beidseitig mit einer Halteleiste (17, 19) ausgerüstet ist, der im Abstand auch an der unteren Längsseite (20) positionierte Halterollen zugeordnet sind.

3. Anlage nach Anspruch 1,
**dadurch gekennzeichnet,**
daß dem Untergurt (15) des Gurtförderers (2) im Abstand positionierte Halterollen (22, 23) und Druckrollen (25) zugeordnet sind.

4. Anlage nach Anspruch 1,
**dadurch gekennzeichnet,**
daß die Unterseite (16) der Förderbanddecke (4) mit der als rechteckiges Gummi- oder Kunststoffprofil (33) ausgebildeten Halteleiste (17,19) verklebt ist.

5. Anlage nach Anspruch 4,
**dadurch gekennzeichnet,**
daß das Kunststoffprofil (33) eine mit der Breite der Halterollen (22, 23) korrespondierende Breite aufweist.

6. Anlage nach Anspruch 4,
**dadurch gekennzeichnet,**
daß das Kunststoffprofil (33) eine Dreieckform aufweist, wobei es ein rechtwinkliges Dreieck bildet, das mit den den rechten Winkel einschließenden Winkelseiten (35) an der Unterseite (16) anliegt bzw. parallel zum Gurtrand (34) verläuft und wobei die Halterollen (22, 23) korrespondierend ausgebildet sind.

7. Anlage nach Anspruch 4,
**dadurch gekennzeichnet,**
daß das Kunststoffprofil (33) mit den als Diabolorollen ausgebildeten Halterollen (22, 23) korrespondierend geformt ist oder daß Rollen und Profile umgekehrte Formen aufweisen.

8. Anlage nach Anspruch 1
**dadurch gekennzeichnet,**
daß die Föderbanddecke (4) und das Kunststoffprofil (33) als Baueinheit ausgebildet sind.

9. Anlage nach Anspruch 1,
**dadurch gekennzeichnet,**
daß die Förderbanddecke (4) eine Gurtoberfläche (26) mit aufgeklebter Rillenprofilbahn (40) aufweist.

10. Anlage nach Anspruch 9,
**dadurch gekennzeichnet**,
daß die Förderbanddecke (4) randseitig und beidseitig rillenfreie Abrollflächen (40) aufweist.

11. Anlage nach Anspruch 9,
**dadurch gekennzeichnet,**
daß die Förderbanddecke (4) mit ihrer Rillenprofilbahn (40) in Längsrichtung verlaufenden Rillen (42 ,44) und Stege (43, 45) aufweist, wobei die Stege mit schrägen Flanken (46 47) und abgerundeten freien Kanten (49, 50) ausgerüstet sind.

12. Anlage nach Anspruch 9 und Anspruch 11,
**dadurch gekennzeichnet,**
daß die Förderbanddecke (4) mit Stegen (43, 45) ausgerüstet ist, die am freien Ende (51) eine rund 50 % geringere Breite als am Ende der Verbindungsseite (52) aufweisen.

13. Anlage nach Anspruch 1 und Anspruch 4,
**dadurch gekennzeichnet,**
daß die Förderbanddecke (4) im Bereich der Umkehrrollen (68,69) geführt ist, die dazu randseitig die Halteleisten (17, 19) aufnehmende Ausnehmungen (71, 72) aufweisen.

14. Anlage nach Anspruch 1 und Anspruch 4 und Anspruch 13,
**dadurch gekennzeichnet,**
daß die Förderbanddecke (4) mit Halteleisten (17,19) bestückt ist, die mit im Abstand ausgebildeten, zur Mitte der Gurtbanddecke (4) bogenförmig auslaufenden und einen Stützsteg (55) belassenden Ausschnitten (54) ausgerüstet sind.

15. Anlage nach Anspruch 9,
**dadurch gekennzeichnet,**
daß die Förderbanddecke (4) mit einer aus mehreren, miteinander verbundenen Teilbahnen (56, 57) zusammengesetzten Rollenprofilbahn (40) versehen ist.

16. Anlage nach Anspruch 1,
**dadurch gekennzeichnet,**
daß die Förderbanddecke (4) über die Umkehrrollen (68, 69) spannbar ist, die im Traggerüst (3) verschiebbar gelagert angeordnet sind.

17. Anlage nach Anspruch 1,
**dadurch gekennzeichnet,**
daß die Förderbanddecke (4) mit den Halteteilen (61) sowie den Umkehrrollen (68, 69) und Antrieben (70) einem zum Traggerüst (3) gehörenden Stützträger (29) zugeordnet ist, der mit der unteren Längsseite (20) im Traggerüst (3) über Schwenkgelenke (30) gelagert und an der oberen Längsseite (18) über Stelleinrichtungen (31) gehalten ist.

18. Anlage nach Anspruch 17,
**dadurch gekennzeichnet,**
daß die Stelleinrichtungen (31) als Stellspindeln ausgebildet sind.

19. Anlage nach Anspruch 1,
**dadurch gekennzeichnet,**
daß der unteren Längsseite (20) der Förderbanddecke (4) eine verstellbar ausgebildete Leitplanke (10) zugeordnet ist.

20. Anlage nach Anspruch 1,
**dadurch gekennzeichnet,**
daß dem Untergurt (16) des Gurtförderers (2) in die Rillenprofilbahn (40) eingreifende Reinigungsbürsten (64, 65) zugeordnet sind.

21. Anlage nach Anspruch 20,
**dadurch gekennzeichnet,**
daß die Reinigungsbürsten (64, 65) auf einer Welle (66) auch einzeln drehbar angeordnet sind, die über einen Antrieb verfügt.

22. Verfahren zur trockenen Klassierung von Feinstgut, insbesondere Feinstkohle, bei dem die Feinstkohle vom oberen Rand her mengenmäßig einstellbar auf die endlos umlaufende, schräggestellte und entsprechend einstellbare Förderbanddecke eines Gurtförderers aufgegeben wird, wobei die feinsten Kohlepartikel in den Rillen der Förderbanddecke verbleiben und kopfseitig des Gurtförderers ausgetragen werden, während die groben Kohlepartikel über die tiefer liegende Längsseite der Förderbanddecke abgefördert werden,
**dadurch gekennzeichnet,**
daß die Förderbanddecke während des Umlaufes gleichmäßig und damit einen ruhigen Lauf ergebend über die gesamte Länge des Gurtförderers von der Unterseite her randseitig abgestützt und an der oberen Längsseite rollend geführt und zugleich von der Gurtoberfläche her rollend gehalten wird.

23. Verfahren nach Anspruch 22,
**dadurch gekennzeichnet,**
daß die Förderbanddecke an der oberen und an der unteren Längsseite von der Unterseite her rollend geführt wird.

## Claims

1. System for separating very fine-grained materials, in particular very fine coal, with an inclined belt conveyor held in a support structure, the conveyor belt cover of which is fitted with longitudinal grooves running in the longitudinal direction of the belt conveyor, with the inlet feeding from the upright longitudinal side on the return roller on the feed side, with the fine material discharge provided in front of the head of the return roller on the discharge side and the coarse material discharge provided on the deeper-lying longitudinal side of the conveyor belt cover, characterised in that on the underside (16) the conveyor belt cover (4) has a retaining strip (17) projecting over the belt surface (21) on the edge side of the upright longitudinal side (18), said retaining strip being appropriately constructed with retaining rollers (22, 23) arranged at a distance and along the length of the support structure (3), and the deflection at the return rollers (68, 69), which are constructed so as to be actuated, is advantageously sub-divided; and that pressure rollers (25) are provided which are allocated to the retaining rollers and roll on the belt surface (26).

2. System according to Claim 1, characterised in that the conveyor belt cover (4) is fitted on both sides with a retaining strip (17, 19), to which retaining rollers positioned at a distance also on the lower longitudinal side (20) are allocated.

3. System according to Claim 1, characterised in that the retaining rollers (22, 23) and pressure rollers (25) positioned at a distance are allocated to the bottom belt (15) of the belt conveyor (2).

4. System according to Claim 1, characterised in that the underside (16) of the conveyor belt cover (4) is adhered to the retaining strip (17, 19) constructed as a rectangular rubber or plastic profile (33).

5. System according to Claim 4, characterised in that the plastic profile (33) has a width corresponding to the width of the retaining rollers (22, 23).

6. System according to Claim 4, characterised in that the plastic profile (33) has a triangular shape, whereby it forms a right-angled triangle, which abuts against the underside (16) with the angle sides (35) enclosing the right angle, or runs parallel to the belt edge (34), and whereby the retaining rollers (22, 23) are constructed accordingly.

7. System according to Claim 4, characterised in that the plastic profile (33) is shaped to correspond to the retaining rollers (22, 23) provided in the form of diabolo-type rollers, or that rollers and profiles have reversed shapes.

8. System according to Claim 1, characterised in that the conveyor belt cover (4) and the plastic profile (33) are constructed as a structural unit.

9. System according to Claim 1, characterised in that the conveyor belt cover (4) has a belt surface (26) with adhered groove profile face (40).

10. System according to Claim 9, characterised in that the conveyor belt cover (4) has rolling surfaces (40) free of grooves on the edge side and on both sides.

11. System according to Claim 9, characterised in that the conveyor belt cover (4) has grooves (42, 44) and webs (43, 45) running in longitudinal direction with its groove profile face (40), whereby the webs are equipped with oblique flanks (46, 47) and rounded free edges (49, 50).

12. System according to Claim 9 and Claim 11, characterised in that the conveyor belt cover (4) is equipped with webs (43, 45), which at the free end (51) have a width which is about 50% smaller than at the end of the connection side (52).

13. System according to Claim 1 and Claim 4, characterised in that the conveyor belt cover (4) is guided in the region of the return rollers (68, 69) which for this have recesses (71, 72) receiving the retaining strips (17, 19) on the edge side.

14. System according to Claim 1 and Claim 4 and Claim 13, characterised in that the conveyor belt cover (4) is fitted with retaining strips (17, 19), which are provided with cut-out sections (54), which are constructed at a distance and extend in a curve to the centre of the belt cover, leaving a support web (55).

15. System according to Claim 9, characterised in that the conveyor belt cover (4) is provided with a roller profile face (40) composed of several interconnected face sections (56, 57).

16. System according to Claim 1, characterised in that the conveyor belt cover (4) may be spanned over the return rollers (68, 69) which are displaceably mounted in the support structure (3).

17. System according to Claim 1, characterised in that the conveyor belt cover (4) with the retaining parts (61) and the return rollers (68, 69) and drives (70) is allocated to a support girder (29) belonging to the support structure (3), said support girder being mounted at the lower longitudinal side (20) in the support structure (3) by means of swivel links (30) and held at the upper longitudinal side (18) via adjusting means (31).

18. System according to Claim 17, characterised in that the adjusting means (31) are provided in the form of adjusting spindles.

19. System according to Claim 1, characterised in that an adjustably constructed guide plank (10) is allocated to the lower longitudinal side (20) of the conveyor belt cover (4).

20. System according to Claim 1, characterised in that cleaning brushes (64, 65) engaging into the groove profile face (40) are allocated to the bottom belt (16) of the belt conveyor (2).

21. System according to Claim 20, characterised in that the cleaning brushes (64, 65) are also arranged to rotate individually on a shaft (66) which is provided with a drive.

22. Process for the dry grading of very fine material, in particular very fine coal, in which the very fine coal is fed from the upper edge in adjustable quantities onto the continuously rotating, sloping and appropriately adjustable conveyor belt cover of a belt conveyor, whereby the very fine coal particles remain in the grooves of the conveyor belt cover and are discharged on the head side of the belt conveyor, while the coarse coal particles are conveyed away via the deeper-lying longitudinal side of the conveyor belt cover, characterised in that during rotation, the conveyor belt cover is evenly supported on the edge side over the entire length of the belt conveyor from the underside, thus resulting in quiet running, and is guided to roll on the upper longitudinal side, while at the same time being held to roll from the belt surface.

23. Process according to Claim 22, characterised in that the conveyor belt cover is guided to roll on the upper and on the lower longitudinal side from the underside.

## Revendications

1. Installation de séparation de matières de granulométrie fine, en particulier de charbon fin, comprenant un convoyeur à courroie incliné et supporté dans une ossature de support, dont la couverture de bande de convoyeur est munie de rainures longitudinales s'étendant dans la direction longitudinale du convoyeur à courroie, comprenant une entrée de chargement au niveau du rouleau de renvoi de la face de travail depuis le côté longitudinal relevé, une sortie de charge fine prévue en avant du rouleau de renvoi de la face de sortie et une sortie de charge grossière prévue au niveau de la face latérale abaissée de la couverture de bande de convoyeur, caractérisée en ce que la couverture de bande de convoyeur (4) présente sur la face inférieure (16) une baguette de maintien (17) s'avançant au-dessus de la surface de courroie (21) et du côté du bord de la face longitudinale relevée (18), qui est réalisée à distance et de manière correspondante avec des rouleaux de maintien (22, 23) disposés le long de l'ossature de support (3) et qui est divisée de manière à favoriser la déviation au niveau des rouleaux de renvoi (68, 69) et en ce que des rouleaux de pression (25) associés aux rouleaux de maintien, qui roulent sur la surface supérieure de courroie (26), sont prévus.

2. Installation selon la revendication 1, caractérisée en ce que la couverture de bande de convoyeur (4) est munie de part et d'autre d'une baguette de maintien (17, 19), qui sont associées également à distance aux rouleaux de maintien positionnés au niveau de la face inférieure longitudinale (20).

3. Installation selon la revendication 1, caractérisée en ce que des rouleaux de pression (25) et des rouleaux de maintien (22, 23) positionnés à distance sont associés à la courroie inférieure (15) du convoyeur à courroie (2).

4. Installation selon la revendication 1, caractérisée en ce que la face inférieure (16) de la couverture de bande de convoyeur (4) est collée avec la baguette de maintien (17, 19) réalisée comme un profilé (33) rectangulaire en plastique ou en caoutchouc.

5. Installation selon la revendication 4, caractérisée en ce que le profilé en plastique (33) présente une largeur correspondant avec la largeur des rouleaux de maintien (22, 23).

6. Installation selon la revendication 4, caractérisée en ce que le profilé en plastique (33) présente une forme en triangle, un triangle à angle droit étant formé, qui s'étend, avec les faces d'angle (35) entourant l'angle droit, parallèlement au bord de courroie (34) ou s'étend contre la face inférieure (16), les rouleaux de maintien (22, 23) étant formés de manière correspondante.

7. Installation selon la revendication 4, caractérisée en ce que le profilé en plastique (33) est formé de manière correspondante avec les rouleaux de maintien (22, 23) réalisés comme des rouleaux en diabolo ou en ce que les rouleaux ou les profilés présentent des formes inversées.

8. Installation selon la revendication 1, caractérisée en ce que la couverture de bande de convoyeur (4) et le profilé en plastique (33) sont réalisés comme une unité modulaire.

9. Installation selon la revendication 1, caractérisée en ce que la couverture de bande de convoyeur (4) présente une surface supérieure de courroie (26) avec une piste de profil à rainures (40) collée dessus.

10. Installation selon la revendication 9, caractérisée en ce que la couverture de bande de convoyeur (4) présente de part et d'autre et du côté du bord des surfaces de roulement (40) sans rainure.

11. Installation selon la revendication 9, caractérisée en ce que la couverture de bande de convoyeur (4) présente des barrettes (43, 45) et des rainures (42, 44) s'étendant longitudinalement avec sa piste de profil à rainures (40), les barrettes étant munies de bords (49, 50) libres arrondis et de flancs (46, 47) inclinés.

12. Installation selon la revendication 9 et 11, caractérisée en ce que la couverture de bande (4) est munie de barrettes (43, 45) qui présentent au niveau de l'extrémité libre (51) une largeur diminuée d'environ 50% par rapport au niveau d'extrémité de la face de liaison (52).

13. Installation selon les revendications 1 et 4, caractérisée en ce que la couverture de bande (4) est guidée dans la région des rouleaux de renvoi (68, 69), qui, à cette fin, du côté du bord, présentent des évidements (71, 72) recevant les baguettes de maintien (17, 19).

14. Installation selon les revendications 1, 4 et 13, caractérisée en ce que la couverture de bande de convoyeur (4) est munie de baguettes de maintien (17, 19), qui sont munies d'entailles (54) réalisées à distance laissant une barrette d'appui (55) et se terminant courbées vers le centre de la couverture de bande de courroie (4).

15. Installation selon la revendication 9, caractérisée en ce que la couverture de bande de convoyeur (4) est munie d'une piste de profil à rouleaux (40) composée de plusieurs pistes partielles (56, 57) reliées les unes aux autres.

16. Installation selon la revendication 1, caractérisée en ce que la couverture de bande de convoyeur (4) peut être tendue par les rouleaux de renvoi (68, 69) qui sont disposés dans l'ossature de support montés coulissants sur paliers.

17. Installation selon la revendication 1, caractérisée en ce que la couverture de bande de convoyeur (4), avec les parties de maintien (61) ainsi que les rouleaux de renvoi (68, 69) et des moyens (70) d'entraînement, est associée à une poutre de support (29) appartenant à l'ossature de support (3), qui est montée sur paliers avec la face longitudinale inférieure (20) dans l'ossature de support par l'intermédiaire d'une articulation de pivotement (30) et est maintenue au niveau de la face longitudinale supérieure (18) par l'intermédiaire de dispositifs de positionnement.

18. Installation selon la revendication 17, caractérisée en ce que les dispositifs de positionnement (31) sont réalisés comme des tiges filetées de positionnement.

19. Installation selon la revendication 1, caractérisée en ce que la face longitudinale inférieure (20) de la couverture de bande de convoyeur (4) est associée à une glissière de sécurité réglable.

20. Installation selon la revendication 1, caractérisée en ce que des brosses de nettoyage (64, 65) en prise dans la piste à profil à rainures (40) sont associées à la courroie inférieure (16) du convoyeur à courroie.

21. Installation selon la revendication 20, caractérisée en ce que les brosses de nettoyage (64, 65) sont disposées sur un arbre (66) également individuellement rotatif, qui dispose d'un moyen d'entraînement.

22. Procédé pour le triage de charges fines, en particulier de charbon fin, dans lequel le charbon fin est chargé depuis le bord supérieur de manière quantitative réglable sur la couverture de bande de convoyeur d'un convoyeur à courroie, réglable de manière correspondante, inclinée et circulant sans fin, les particules de charbon les plus fines restant dans les rainures de la couverture de bande de convoyeur et étant évacuées en tête du convoyeur à courroie, tandis que les particules de charge grossière sont évacuées par l'intermédiaire de la face longitudinale la plus large, caractérisé en ce que la couverture de bande de convoyeur est supportée depuis la face inférieure du côté du bord pendant la circulation régulièrement pour qu'une marche uniforme soit obtenue sur la longueur totale du convoyeur à courroie et est guidée de manière roulante au niveau de la face longitudinale supérieure et est maintenue en même temps roulante depuis la surface supérieure de courroie.

23. Procédé selon la revendication 22, caractérisé en ce que la couverture de bande de convoyeur est guidée, depuis la face inférieure, de manière roulante au niveau de la face longitudinale inférieure et de la face longitudinale supérieure.
